# EUROPÄISCHE PATENTSCHRIFT

(11) **EP 1 952 504 B1**
(45) Veröffentlichungstag und Bekanntmachung des Hinweises auf die Patenterteilung: **31.03.2010**
(21) Anmeldenummer: 06818310.2
(22) Anmeldetag: 30.10.2006
(51) Int. Cl.: H02J 7/14

(54) **MEHRSPANNUNGSBORDNETZ FÜR EIN KRAFTFAHRZEUG**
MULTI-VOLTAGE VEHICLE ELECTRICAL SUPPLY SYSTEM
RESEAU DE BORD A TENSIONS MULTIPLES POUR VEHICULE AUTOMOBILE

(30) Priorität: 25.11.2005 DE 102005056232
(43) Veröffentlichungstag der Anmeldung: 06.08.2008
(73) Patentinhaber: Bayerische Motoren Werke Aktiengesellschaft, 80809 München (DE)
(72) Erfinder: PRÖBSTLE, Hartmut, 86159 Augsburg (DE); RÖSLER, Michael, 82049 Pullach (DE); MERWERTH, Jörg, 85221 Dachau (DE); CHRIST, Thomas, 48326 Anburn Hills (US)
(74) Vertreter: Bullwein, Fritz
(86) Internationale Anmeldenummer: PCT/EP2006/010400
(87) Internationale Veröffentlichungsnummer: WO 2007/059848

(56) Entgegenhaltungen:
- EP-A- 1 523 083
- WO-A-02/066293
- DE-A1- 10 200 466
- GB-A- 1 585 915
- US-A- 4 044 293
- US-A1- 2001 052 760
- US-B1- 6 653 745

## Beschreibung

Die Erfindung bezieht sich auf ein Mehrspannungsbordnetz für ein Kraftfahrzeug, umfassend wenigstens einen Mehrspannungsgenerator, einen ersten Energiespeicher, dessen Energie in einen ersten Niederspannungs-Bordnetzzweig mit Niederspannungs-Verbrauchern einspeisbar ist, und einen zweiten Energiespeicher, dessen Energie in einen zweiten Hochspannungs-Bordnetzzweig mit Hochspannungs-Verbrauchern einspeisbar ist, sowie wenigstens eine steuerbare Schaltvorrichtung, mittels derer die vom Mehrspannungsgenerator erzeugte Energie auf den ersten und den zweiten Bordnetzzweig verteilbar ist.

Ein derartiges Mehrspannungsbordnetz für ein Kraftfahrzeug ist bekannt aus der DE 103 30 703 A1. Mehrspannungsbordnetze, wie sie in modernen Kraftfahrzeugen vielfach Einsatz finden, umfassen üblicherweise zwei Bordnetzzweige unterschiedlicher Nennspannung. An dem Niederspannungs-Bordnetzzweig, dessen Nennspannung z.B. bei 12 Volt liegen kann, sind Verbraucher niedriger Leistungsaufnahme angeschlossen. An dem Hochspannungs-Bordnetzzweig, dessen Nennspannung beispielsweise 24 Volt betragen kann, sind Hochleistungsverbraucher, wie z.B. Heizungen, eine elektrische Servolenkung, elektromotorische Bremsen etc. angeschlossen. Jeder Bordnetzzweig weist einen ihm zugeordneten Energiespeicher auf, wobei sowohl die Verwendung von Batterien als Energiespeicher in beiden Bordnetzzweigen als auch die Verwendung einer Batterie als Energiespeicher des Niederspannungs-Bordnetzzweiges und einer. Kondensatorschaltung hoher Kapazität als Energiespeicher des Hochspannungs-Bordnetzzweiges bekannt sind. Gespeist werden beide Bordnetzzweige in der Regel von einem Mehrspannungsgenerator, der beispielsweise als integrierter Startgenerator ausgebildet sein kann. Unter dem Begriff "Mehrspannungsgenerator" sei im Rahmen der vorliegenden Anmeldung jeder Generator verstanden, dessen Ausgangsspannungsniveau zeitlich variiert oder variierbar ist.

Bei den bekannten Mehrspannungsbordnetzen, wie auch dem in der vorgenannten DE 103 30 703 A1 offenbarten Mehrspannungsbordnetz, wird die gleichgerichtete Generatorausgangsspannung unmittelbar in den Hochspannungs-Bordnetzzweig eingespeist. Diese steht über einen DC/DC-Wandler mit dem Niederspannungs-Bordnetzzweig in Verbindung. Der DC/DC-Wandler stellt nicht nur eine Umspannvorrichtung zur Anpassung der unterschiedlichen Spannungsniveaus in den einzelnen Bordnetzzweigen zur Verfügung, sondern ermöglicht durch geeignete Ansteuerung seiner schaltbaren Elemente auch eine betriebsparameterabhängige Verteilung der vom Generator erzeugten Energie auf die beiden Bordnetzzweige. Als relevante Betriebsparameter kommen etwa der Ladungszustand der Energiespeicher und/oder die Momentanbelastung der einzelnen Bordnetzweige durch angeschlossene Verbraucher in Frage. Einen vergleichbaren Aufbau zeigt das in der EP 136 00 90 B1 offenbarte Bordnetz, welches zusätzlich auch für den Rekuperationsbetrieb geeignet ist.

Nachteilig bei den bekannten Bordnetztopologien ist die Notwendigkeit des DC/DG Wandlers als Umspannungs- und Schaltelement. Derartige Wandler sind nämlich vergleichsweise teuer und kompliziert in Aufbau und Ansteuerung. Zudem stellen sie eine deutliche Leistungsbegrenzung dar, die insbesondere im Rekuperationsbetrieb, in dem kurzfristig sehr hohe Leistungen durch Energierückgewinnung bei Bremsvorgängen in das Bordnetz eingespeist werden, stark effizienzmindernd ist.

Das Dokument US 2001/0052760 A1 offenbart ein Mehrspannunasbordnetz für ein Kraftfahrzeug, umfassend einen Mehrspannungsgenerator, einen ersten Energiespeicher, dessen Energie in einen ersten Niederspannungs-Bordnetzzweig mit Niederspannungs-Verbrauchern einspeisbar ist, und einen zweiten Energiespeicher, dessen Energie in einen zweiten Hochspännungs-Bordnetzzweig mit Hochspannungs-Verbrauchern einspeisbar ist. Die vom Mehrspannungsgenerator erzeugte Energie ist durch eine Schaltvorrichtung auf den ersten und den zweiten Bordnetzzweig verteilbar, wobei der erste und der zweite Energiespeicher in Reihe miteinander verschaltet sind und der erste Bordnetzzweig einerseits mit einem Knoten zwischen dem ersten und dem zweiten Energiespeicher und andererseits mit einem Bezugspotential des ersten Energiespeichers verbunden ist, während der zweite Bordnetzzweig parallel zu der Reihenschaltung aus erstem und zweitem Energiespeicher angeschlossen ist. Die Schaltvorrichtung ist zwischen einer ersten Schaltungskonfiguration, in der der Mehrspannungsgenerator parallel zum ersten Energiespeicher sowie zum ersten Bordnetzzweig liegt, und einer zweiten Konfiguration, in der der Mehrspannungsgenerator parallel zur Reihenschaltung aus erstem und zweitem Energiespeicher sowie zum zweiten Bordnetzzweig liegt, schaltbar und umfasst einen ersten schaltbaren Unterbrecher zwischen dem Anschlussknoten des ersten Bordnetzzweigs und dem seinem Bezugspotential abgewandten Anschluss des Mehrspannungsgenerators. Der erste Energiespeicher ist als Batterie ausgestaltet.

Es ist eine Aufgabe der vorliegenden Erfindung eine neuartige, vereinfachte Topologie für ein Mehrspannungsbordnetz für ein Kraftfahrzeug zur Verfügung zu stellen, welches ohne DC/DC-Wandler auskommt und dennoch eine hohe Kompatibilität zu bestehenden Niederspannungs-Bordnetztopologien aufweist.

Die Aufgabe wird durch ein Mehrspannungsbordnetz mit den Merkmalen des Anspruchs 1 gelöst.

Das erfindungsgemäße Bordnetz koppelt seine beiden Zweige direkt, indem die Energiespeicher miteinander in Reihe geschaltet sind. Gleichwohl ist es durch den Einsatz einer geeigneten Schaltvorrichtung möglich, beide Bordnetzzweige aus "Sicht " ihrer Verbraucher entkoppelt zu halten, so dass bekannte und bewährte Bordnetzzweigtopologien, insbesondere bewährte Niederspannungs-Bordnetztopologien übernommen werden können.

So setzt der Niederspannungs-Bordnetzzweig an einem Knoten zwischen den beiden Energiespeichern an und ist dadurch mit dem ersten Energiespeicher, mit dem er ein gemeinsames Bezugspotential aufweist, parallel geschaltet. Der zweite Energiespeicher hingegen nimmt das obere Potential des ersten Energiespeichers als Bezugspotential, setzt also auf dem Spannungsniveau des Niederspannungsbordnetzzweiges auf. Die Hochspannungsverbraucher des Hochspannungs-Bordnetzzweiges liegen parallel zu der Reihenschaltung aus erstem und zweitem Energiespeicher und "sehen" daher die Summe der Spannungsniveaus beider Energiespeicher.

Beide Energiespeicher und damit beide Bordnetzzweige werden über geeignete Schaltmittel von demselben Generator gespeist. Die Schaltmittel sind dabei so ausgelegt, dass die Generatorausgangsspannung entweder nur über dem ersten Energiespeicher anliegt oder über der Reihenschaltung beider Energiespeicher, wobei im erstgenannten Fall dafür Sorge getragen werden muss, dass kein Strom vom zweiten Energiespeicher zu dem ersten Energiespeicher fließt. Neben dem erwünschten Wegfall des DC/DC-Wandlers weist die erfindungsgemäße Bordnetztopologie den Vorteil auf, dass der zweite Energiespeicher nur ein vergleichsweise geringes Spannungsniveau aufweisen muss. Während sein maximales Spannungsniveau bei Bordnetzen nach dem Stand der Technik in etwa der Nennspannung des Hochspannungs-Bordnetzzweiges entsprechen muss, genügt es bei dem erfindungsgemäßen Bordnetz, wenn das maximale Spannungsniveau des zweiten Energiespeichers in etwa der Differenz der Nennspannungen der beiden Bordnetzzweige entspricht.

Erfindungsgemäß umfasst die steuerbare Schaltvorrichtung einen ersten schaltbaren Unterbrecher zwischen dem Anschlussknoten des ersten Bordnetzzweigs und dem seinem Bezugspotential abgewandten Anschluss des Mehrspannungsgenerators. Dies entspricht einem Schalter in der direkten Verbindungsleitung zwischen dem Ausgang des Generators und dem nicht auf Masse liegenden, bei Bordnetzen regelmäßig positiven Pol des ersten Energiespeichers.

Bei einer ersten, besonders einfachen Ausführungsform der Erfindung umfasst die steuerbare Schaltvorrichtung weiter eine Diode, die zwischen den ihren jeweiligen Bezugspotentialen abgewandten Anschlüssen des Mehrspannungsgenerators und des zweiten Energiespeichers derart angeschlossen ist, dass bei geschlossenem ersten Unterbrecher kein Strom vom zweiten zum ersten Energiespeicher fließen kann. Dies bedeutet mit anderen Worten, dass der Ausgang des Generators auch mit dem positiven Pol des zweiten Energiespeichers verbunden ist und zwar über eine Diode, die hinter dem Abzweig zum ersten Unterbrecher angeordnet ist. Die Ausrichtung der Diode ist so gestaltet, dass bei geöffnetem erstem Unterbrecher die Generatorausgangsspannung über der Reihenschaltung aus erstem und zweitem Energiespeicher anliegt, d.h. beide Energiespeicher aufgeladen werden, während bei geschlossenem ersten Unterbrecher nur der erste Energiespeicher geladen wird und ein Stromfluss von dem zweiten Energiespeicher zum ersten Energiespeicher in Sperrrichtung der Diode erfolgen würde und damit unterbunden ist.

Bei einer alternativen Ausführungsform der Erfindung kann anstelle der Diode ein zweiter schaltbarer Unterbrecher vorgesehen sein, der zwischen den ihren jeweiligen Bezugspotentialen abgewandten Anschlüssen des Mehrspannungsgenerators und des zweiten Energiespeichers derart angeschlossen ist, dass bei geschlossenem erstem Unterbrecher ein Stromfluss vom zweiten zum ersten Energiespeicher durch Öffnen des zweiten Unterbrechers verhinderbar ist. Es ist offensichtlich, dass bei dieser Ausführungsform eine geeignete Ansteuerung der beiden Unterbrecher erfolgen muss, um den unerwünschten Stromfluss zu unterbinden. Dieser Nachteil erhöhter Komplexität der Ansteuerung wird jedoch kompensiert durch den Vorteil, dass der Spannungsabfall über der Diode entfällt.

Als erster Energiespeicher, der in der Regel die Hauptlast der Versorgung der Verbraucher tragen muss, eignet sich eine vergleichsweise "große" Batterie. Für den zweiten Energiespeicher wird erfindungsgemäß eine Kondensatorschaltung aus einem oder mehreren Kondensatoren hoher Kapazität, so genannter Superkondensatoren oder SuperCaps, verwendet.

Zum effizienten und wirtschaftlichen Betrieb eines derartigen Bordnetzes ist es günstig, die steuerbare Schalteinrichtung im Wesentlichen stromlos zu schalten. Dies bedeutet, dass bei beiden vorgenannten Ausführungsformen, d.h. sowohl bei der Ausführungsform mit Diode als auch mit zweitem Unterbrecher (die gemeinsam von dem Oberbegriff "wenigstens unidirektionale Trenneinheit" erfasst werden), entsprechend dem erfindungsgemäßen Betriebsverfahren vor dem Schließen des ersten Unterbrechers die Generatorausgangsspannung dem Potential des seinem Bezugspotential abgewandten Anschluss des ersten Energiespeichers angeglichen wird. Mit anderen Worten bedeutet dies, dass im Fall, dass nur der erste Energiespeicher aufgeladen werden soll, d.h. üblicherweise der Ausgang des Generators mit dessen positiven Pol verbunden werden soll, zunächst das aktuelle Potential an diesem Pol erfasst wird und die Ausgangsspannung des Generators diesem Potential angeglichen wird. Entsprechend führt ein Schließen des ersten Unterbrechers zu keinem Stromfluss, d.h. es wird stromlos geschaltet. Anschließend kann die Ausgangsspannung des Generators auf ein gewünschtes Ladeniveau gefahren werden. Zur Erfassung der Potentiale der Energiespeicher sind vorzugsweise entsprechende Sensormittel vorgesehen.

Bei der zuvor erläuterten Ausführungsform mit zwei Unterbrechern wird bei einer günstigen Weiterbildung des erfindungsgemäßen Verfahrens vor dem Angleichen der Generatorausgangsspannung der zweite Unterbrecher geöffnet. Hierdurch wird verhindert, dass beim Schließen des zweiten Unterbrechers Strom vom zweiten Energiespeicher zum ersten Energiespeicher fließt.

Im Fall, dass auch der zweite Energiespeicher aufgeladen werden soll, ist bei der zuvor erläuterten Ausführungsform mit einer Diode lediglich der erste Unterbrecher, vorzugsweise nach Angleichen der Generatorausgangsspannung an das Potential des positiven Pols des ersten Energiespeichers, zu öffnen. Bei der zweiten Ausführungsform mit zwei Unterbrechern hingegen muss zusätzlich der zweite Unterbrecher geschlossen werden. Bei einer günstigen Ausführungsform des erfindungsgemäßen Verfahrens ist dabei vorgesehen, dass vor dem Schließen des zweiten Unterbrechers zunächst der erste Unterbrecher geöffnet und die Generatorausgangsspannung dem Potential an dem seinem Bezugspotential abgewandten Anschluss des zweiten Energiespeichers angeglichen wird. Auch diese Maßnahme dient analog zu den obigen Erläuterungen dem stromlosen Schalten des zweiten Unterbrechers.

Die grundsätzliche Strategie der Ansteuerung der Schaltvorrichtung sollte sein, den ersten Unterbrecher so selten wie möglich zu öffnen, damit der Niederspannungs-Bordnetzzweig im Wesentlichen einen herkömmlichen Niederspannungs-Energiespeicher "sieht". Bei einer Weiterbildung des erfindungsgemäßen Betriebsverfahrens ist daher vorgesehen, das der erste Unterbrecher in Wesentlichen nur geöffnet wird, wenn der Ladezustand des zweiten Energiespeichers ein vorbestimmtes Ladeniveau unterschritten hat. Zusätzlich kann auch eine Öffnung des ersten Unterbrechers im Rekuperationsbetrieb vorgesehen sein.

Erfindungsgemäß wird ein Mehrspannungsgenerator mit beliebig ansteuerbarer Ausgangsspannung verwendet, mit Hilfe dessen im Rahmen der Erfindung eine als zweiter Energiespeicher dienende Kondensatorschaltung mit z.B. linearen Laderampen geladen wird.

Weitere Merkmale der Erfindung ergeben sich aus der nachfolgenden speziellen Beschreibung und den Zeichnungen. Es zeigen:
- Figur 1:: ein schematisches Ersatzschaltbild einer erfindungsgemäßen Bordnetztopologie mit verallgemeinerter Vorrichtung.
- Figur 2:: eine erste Ausführungsform der Schaltvorrichtung in Figur 1.
- Figur 3:: eine zweite Ausführungsform der Schaltvorrichtung in Figur 1.

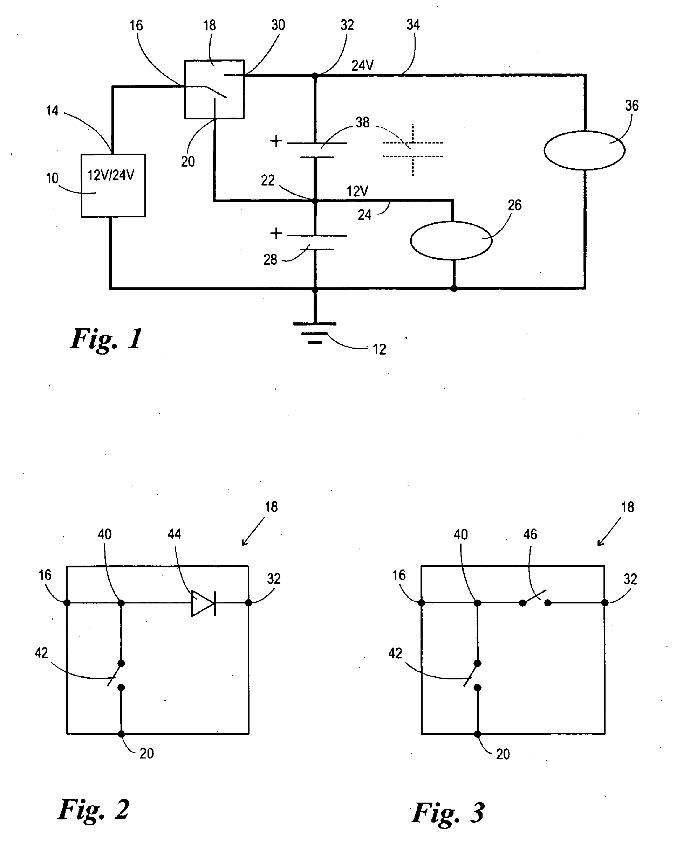

Figur 1 zeigt ein schematisches Ersatzschaltbild einer erfindungsgemäßen Bordnetztopologie, ausgelegt für zwei Bordnetzzweige mit rein beispielhaften Nennspannungen von 12 und 24 Volt.

Als Energiequelle des Bordnetzes dient der Generator 10. Als Generator kann grundsätzlich jede Spannungserzeugungsvorrichtung dienen, die eine variierende oder variierbare Ausgangsspannung liefert. Der Begriff des Generators umfasst dabei auch eine etwaige nachgeschaltete Elektronik, wie etwa eine Leistungs- oder Gleichrichtungselektronik. In seiner einfachsten Ausführungsform kann der Generator ein in Kraftfahrzeugen üblicherweise verwendeter Generator mit nur einer Nennspannung, jedoch hoher Welligkeit der Ausgangsspannung sein. Günstiger ist jedoch eine Ausführungsform als Zweispannungsgenerator mit zwei alternativ ansteuerbaren Ausgangsspannungen - im vorliegenden Fall von 12 und 24 Volt. Besonders vorteilhaft ist jedoch ein Mehrspannungsgenerator mit stufenlos ansteuerbarer Ausgangsspannung, wobei der ansteuerbare Ausgangsspannungsbereich beim vorliegenden Ausführungsbeispiel 12 und 24 Volt umfassen muss. Im gezeigten Ausführungsbeispiel ist der Generator einerseits an ein Bezugspotential 12 (Masse) angeschlossen und liefert an seinem Ausgang 14 eine positive (ggf. wellige) Gleichspannung.

Der Ausgang 14 des Generators 10 ist mit dem Eingang 16 einer Schaltvorrichtung 18 verbunden. Die Schaltvorrichtung 18 ist in Figur 1 als "Blackbox" dargestellt. Vorteilhafte Ausführungsformen der Schaltvorrichtung 18 sollen weiter unten im Zusammenhang mit den Figuren 2 und 3 erläutert werden. Die Schaltvorrichtung 18 weist einen ersten Ausgang 20 auf, der mit einem Knoten 22 verbunden ist. Der Knoten 22 ist zum einen mit dem Niederspannungszweig 24 des Bordnetzes und den daran angeschlossenen Verbrauchern 26 verbunden. An den Verbrauchern 26 fällt die Niederspannung des Niederspannungs-Bordnetzzweiges - im vorliegenden Fall 12 Volt - gegen Masse 12 ab.

Der Knoten 22 ist weiter mit dem Pluspol eines Energiespeichers 28 verbunden, der mit seinem Minuspol ebenfalls auf Masse 12 liegt. Als Energiespeicher 28 dient bei dem gezeigten Ausführungsbeispiel eine Batterie, die mit 90 Ah vergleichsweise groß ausgelegt ist. Die Nennspannung des Niederspannungs-Bordnetzzweiges 24 und damit der Batterie 28 liegt beim gezeigten Ausführungsbeispiel bei 12 Volt.

Im Fall, dass die Schaltvorrichtung 18 so geschaltet ist, dass der Generatorausgang 14 mit dem Knoten 22 verbunden ist "sehen" die Verbraucher 26 ein herkömmliches 12 Volt-Bordnetz. Sollte in dieser Schaltstellung der Ladezustand der Batterie 28 unter der Ausgangsspannung des Generators 10, der in diesem Schaltzustand bei einer Nenn-Ausgangsspannung von ebenfalls etwa 12 Volt betrieben wird, liegen, wird gleichzeitig die Batterie 28 wieder aufgeladen.

In ihrer zweiten Schaltstellung ist der Eingang 16 der Schaltvorrichtung 18 wirksam mit deren zweitem Ausgang 30 verbunden. Der Ausgang 30 der Schaltvorrichtung 18 ist mit einem Knoten 32 verbunden, an den der Hochspannungszweig 34 des Bordnetzes angeschlossen ist. Im Hochspannungs-Bordnetzzweig 34 sind die Hochspannungsverbraucher 36 angeschlossen, über denen die Hochspannung - im vorliegenden Fall mit einem Nennwert von 24 Volt - gegen Masse 12 abfällt.

Der Knoten 32 ist weiter mit dem Pluspol eines zweiten Energiespeichers 38 verbunden, der jedoch an seinem Minuspol nicht auf Masse gelegt ist, sondern mit dem Knoten 22 verbunden ist, so dass seine Spannung auf der Spannung des ersten Energiespeichers 28 "aufsetzt". Erfindungsgemäß ist der zweite Energiespeicher 38 als Kondensatorschaltung mit hoher Kapazität, z.B. 50-100 F, realisiert (in Figur 1 gestrichelt dargestellt).

In ihrer zweiten Schalterstellung, in der der Eingang 16 mit dem zweiten Ausgang 30 wirksam verbunden ist, liegt die vom Generator erzeugte Ausgangsspannung, die in diesem Schaltzustand vorzugsweise in etwa der Nennspannung des Hochspannungs-Bordnetzzweiges entspricht, über der Reihenschaltung aus erstem und zweitem Energiespeicher 28, 38 an. An den Niederspannungs-Verbrauchern liegt die dem aktuellen Ladezustand der Batterie 28 entsprechende Spannung an, während an den Hochspannungsverbrauchern 36 im Wesentlichen die Nennspannung des Hochspannungs-Bordnetzzweiges 34 anliegt.

Figur 2 zeigt eine erste, besonders einfache Ausführungsform der Schaltvorrichtung 18, die rein schematisch zu verstehen ist. Der Eingang 16 ist mit dem Knoten 40 verbunden, der über einen Unterbrecher 42 mit dem ersten Ausgang 20 verbunden ist. Andererseits ist der Knoten 40 über eine Diode 44 mit dem zweiten Ausgang 32 verbunden. In geschlossenem Zustand des Unterbrechers 40 liegt die Ausgangsspannung des Generators 10 unmittelbar über der Batterie 28 und dem Niederspannungs-Bordnetzzweig 26 an. Dies ist der Normalzustand des Bordnetzes, der gemäß der bevorzugten Betriebsstrategie während der überwiegenden Betriebszeit eingehalten wird. Durch die Diode 24 wird verhindert, dass ein Stromfluss vom positiven Pol des zweiten Energiespeichers 38 zum Knoten 22 fließt. Bei geöffnetem Zustand des Unterbrechers 42 liegt hingegen die Ausgangsspannung des Generators 10 über der Reihenschaltung von erstem und zweitem Energiespeicher 28, 38 und über dem Hochspannungs-Bordnetzzweig 34 an. In diesem Zustand werden sowohl der erste Energiespeicher 28 als auch der zweite Energiespeicher 38 aufgeladen. Es ist erkennbar, dass der Schaltzustand des Unterbrechers 42 und die Ausgangsspannung des Generators 10 aufeinander abgestimmt sein müssen. So sollte bei geschlossenem Unterbrecher 42 die Ausgangsspannung des Generators 10 in etwa der Nennspannung des Niederspannungs-Bordnetzzweiges 24 entsprechen, während sie bei geöffnetem Unterbrecher 42 in etwa der Nennspannung des Hochspannungs-Bordnetzzweiges 34 entsprechen sollte. Dies ist bei einem Zweispannungs- oder stufenlos ansteuerbaren Generator 10 mit einer geeigneten Steuerung leicht zu verwirklichen. Bei einem einfachen Generator mit nur einer Ausgangs-Nennspannung mit hoher Welligkeit sollte der Unterbrecher hingegen amplitudenabhängig geschaltet werden, wobei er zu Zeiten niedrigerer Ausgangsspannung geschlossen und zu Zeiten höherer Ausgangsspannung geöffnet sein sollte.

Diese in Figur 2 gezeigte Ausführungsform der Schaltvorrichtung 18 hat den Vorteil des besonders einfachen Aufbaus. Nachteilig ist jedoch der unvermeidliche Spannungsabfall an der Diode 44. Figur 3 zeigt eine alternative Ausführungsform, die diesen Nachteil überwindet. Anstelle der Diode 44 ist bei der Ausführungsform gemäß Figur 3 ein zweiter Unterbrecher 46 vorgesehen. Dieser wird im ersten Schaltzustand der Schaltvorrichtung 18, d.h. bei geschlossenem Unterbrecher 42 geöffnet und im zweiten Schaltzustand der Schaltvorrichtung 18, d.h. bei geöffnetem Unterbrecher 42 geschlossen. Die Korrelation von Schaltzustand und Generatorausgangsspannung entspricht im Wesentlichen der oben in Verbindung Figur 2 erläuterten.

Um, was aus wirtschaftlichen Gründen günstig ist, die Schaltung der Unterbrecher 42, 46 stromlos vorzunehmen, wird günstigerweise beim Übergang vom ersten zum zweiten Schaltzustand der Schaltvorrichtung 18 zunächst die Generatorausgangsspannung an die tatsächlich über der Batterie 28 anliegende Spannung , die von geeigneten, nicht dargestellten Sensormitteln erfasst wird, angeglichen. Danach kann der Unterbrecher 42 stromlos geöffnet werden. Anschließend wird die Generatorausgangsspannung auf die tatsächliche Spannung des zweiten Energiespeichers 38 angeglichen, so dass nachfolgend der Unterbrecher 46 stromlos geschlossen werden kann. Beim umgekehrten Übergang vom zweiten zum ersten Schaltzustand der Schaltvorrichtung 18 wird hingegen zunächst die Generatorausgangsspannung an die tatsächliche Spannung des zweiten Energiespeichers 38, die ebenfalls von nicht dargestellten Sensormitteln erfasst wird, angeglichen, so dass der zweite Unterbrecher 46 stromlos geöffnet werden kann. Anschließend wird die Generatorausgangsspannung an die tatsächliche Spannung der Batterie 28 angeglichen, so dass nachfolgend der erste Unterbrecher 42 stromlos geschlossen werden kann.

Natürlich stellen die in den Zeichnungen illustrierten und im Rahmen der speziellen Beschreibung erläuterten Ausführungsbeispiele lediglich exemplarische Ausfunrungsformen der vorliegenden Erfindung dar, die durch die Ansprüche definiert ist. Insbesondere im Hinblick auf die gewünschten Nennspannungen der Bordnetzzweige, 24, 34, der Gestaltung der Verbraucher 26, 36 der konkreten Auslegung des Generators 10 und der Realisierung der Steuerung der Schaltvorrichtung 18 in Verbindung mit der Ausgangsspannung des Generators 10 steht dem Fachmann ein breites Spektrum an Variationsmöglichkeiten zur Verfügung. Auch ist es möglich, das erfindungsgemäße Konzept durch kaskadenartige Hinzufügung weiterer Energiespeicher und entsprechender Schaltvorrichtungen, die analog dem oben ausführlich erläuterten Erfindungsgedanken angeschlossen sind, zu erweitern.

## Patentansprüche

1. Mehrspannungsbordnetz für ein Kraftfahrzeug, umfassend wenigstens einen Mehrspannungsgenerator (10),
einen ersten Energiespeicher (28), dessen Energie in einen ersten Niederspannungs-Bordnetzzweig (24) mit Niederspannungs-Verbrauchern (26) einspeisbar ist, und
einen zweiten Energiespeicher (38), dessen Energie in einen zweiten Hochspannungs-Bordnetzzweig (34) mit Hochspannungs-Verbrauchern (36) einspeisbar ist, sowie
wenigstens eine steuerbare Schaltvorrichtung (18), mittels derer die vom Mehrspannungsgenerator (10) erzeugte Energie auf den ersten (24) und den zweiten (34) Bordnetzzweig verteilbar ist,
wobei der erste (28) und der zweite (38) Energiespeicher in Reihe miteinander verschaltet sind und der erste Bordnetzzweig (24) einerseits mit einem Knoten (22) zwischen dem ersten (28) und dem zweiten Energiespeicher (38) und andererseits mit einem Bezugspotential (12) des ersten Energiespeichers (28) verbunden ist, während der zweite Bordnetzzweig (34) parallel zu der Reihenschaltung aus erstem (28) und zweitem Energiespeicher (38) angeschlossen ist,
wobei die steuerbare Schaltvorrichtung (18) zwischen einer ersten Schaltungskonfiguration, in der der Mehrspannungsgenerator (10) parallel zum ersten Energiespeicher (28) sowie zum ersten Bordnetzzweig (24) liegt, und einer zweiten Konfiguration, in der der Mehrspannungsgenerator (10) parallel zur Reihenschaltung aus erstem (28) und zweitem (38) Energiespeicher sowie zum zweiten Bordnetzzweig (34) liegt, schaltbar ist,
wobei die steuerbare Schaltvorrichtung (18) einen ersten schaltbaren Unterbrecher (42) zwischen dem Anschlussknoten (22) des ersten Bordnetzzweigs und dem seinem Bezugspotential (12) abgewandten Anschluss (14) des Mehrspannungsgenerators (10) umfasst, und wobei
der erste Energiespeicher (28) als Batterie ausgestaltet ist, **dadurch gekennzeichnet, dass** der zweite Energiespeicher (38) als Kondensatorschaltung mit hoher Kapazität ausgestaltet ist, dass die Schaltvorrichtung (18) derart steuerbar ist, dass der erste Unterbrecher (42) geöffnet wird, wenn der Ladezustand des zweiten Energiespeichers (38) ein vorbestimmtes Ladeniveau unterschritten hat,
dass der Mehrspannungsgenerator eine beliebig wählbare Ausgangsspannung liefert und
dass der Mehrspannungsgenerator derart ansteuerbar ist, dass er nach Öffnen des ersten Unterbrechers eine Spannungsrampe zum Aufladen der Kondensatorschaltung erzeugt.

2. Mehrspannungsbordnetz nach Anspruch 1,
**dadurch gekennzeichnet, dass**
die steuerbare Schaltvorrichtung (10) weiter eine Diode (44) umfasst, die zwischen den ihren jeweiligen Bezugspotentialen abgewandten Anschlüssen des Mehrspannungsgenerators (10) und des zweiten Energiespeichers (38) derart angeschlossen ist, dass bei geschlossenem erstem Unterbrecher (42) kein Strom vom zweiten (38) zum ersten (28) Energiespeicher fließt.

3. Mehrspannungsbordnetz nach Anspruch 1;
**dadurch gekennzeichnet, dass**
die steuerbare Schaltvorrichtung (19) weiter einen zweiten schaltbaren Unterbrecher (46) umfasst, der zwischen den ihren jeweiligen Bezugspotentialen abgewandten Anschlüssen des Mehrspannungsgenerators (10) und des zweiten Energiespeichers (38) derart angeschlossen ist, dass bei geschlossenem erstem Unterbrecher (42) ein Stromfluss vom zweiten (38) zum ersten (28) Energiespeicher durch Öffnen des zweiten Unterbrechers (46) verhinderbar ist.

4. Mehrspannungsbordnetz nach einem der vorangehenden Ansprüche,
**dadurch gekennzeichnet, dass**
dass ein oder mehrere dritte Energiespeicher vorgesehen sind, die in analoger Weise kaskadierend mit dem ersten und zweiten Energiespeicher (28; 38) und dem Mehrspannungsgenerator (10) verbunden sind.

## Claims

1. A multi-voltage vehicle electrical system for a motor vehicle, comprising at least one multi-voltage generator (10), a first energy store (38), the energy of which can be fed into a first low-voltage vehicle electrical system branch (24) having low-voltage consumers (26), and a second energy store (38), the energy of which can be fed into a second high-voltage vehicle electrical system branch (34) having high-voltage consumers (36), and at least one controllable switching device (18), by means of which the energy generated by the multi-voltage generator (10) can be distributed to the first (24) and the second (34) vehicle electrical system branch, wherein the first (28) and the second (38) energy store are connected in series with one another and the first vehicle electrical system branch (24) is connected, on the one hand, to a node (22) between the first (28) and the second energy store (38) and, on the other hand, to a reference potential (12) of the first energy store (28), while the second vehicle electrical system branch (34) is connected in parallel to the series connection of the first (28) and second energy store (38), wherein the controllable switching device (18) can be switched between a first switching configuration, in which the multi-voltage generator (10) is parallel to the first energy store (28) and to the first vehicle electrical system branch (24), and a second configuration, in which the multi-voltage generator (10) is parallel to the series connection of the first (28) and second (38) energy store and to the second vehicle electrical system branch (34), wherein the controllable switching device (18) comprises a first switchable interrupter (42) between the terminal node (22) of the first vehicle electrical system branch and the terminal (14) of the multi-voltage generator (10) remote from its reference potential (12), and wherein the first energy store (28) is configured as a battery, **characterised in that** the second energy store (38) is configured as a capacitor circuit having high capacitance, **in that** the switching device (18) can be controlled in such a way that the first interrupter (42) is opened when the charge state of the second energy store (38) has fallen below a predetermined charge level, **in that** the multi-voltage generator supplies an output voltage which can be selected as desired and **in that** the multi-voltage generator can be activated in such a way that, after opening the first interrupter, it generates a voltage ramp to charge the capacitor circuit.

2. A multi-voltage vehicle electrical system according to claim 1, **characterised in that** the controllable switching device (10) also comprises a diode (44), which is connected between the terminals of the multi-voltage generator (10) and the second energy store (38) facing away from their respective reference potentials in such a way that when a first interrupter (42) is closed, no current flows from the second (38) to the first (28) energy store.

3. A multi-voltage vehicle electrical system according to claim 1, **characterised in that** the controllable switching device (19) also comprises a second switchable interrupter (46), which is connected between the terminals of the multi-voltage generator (10) and the second energy store (38) remote from their respective reference potentials in such a way that when the first interrupter (42) is closed, a current flow from the second (38) to the first (28) energy store can be prevented by opening the second interrupter (46).

4. A multi-voltage vehicle electrical system according to any one of the preceding claims, **characterised in that** one or more third energy stores are provided, which are analogously connected in a cascade to the first and second energy store (28; 38) and the multi-voltage generator (10).

## Revendications

1. Réseau embarqué multitension de véhicule automobile comprenant :
- au moins un générateur multitension (10),
- un premier accumulateur d'énergie (28) dont l'énergie peut être injectée dans une première branche de réseau embarqué basse tension (24) reliée à des utilisateurs basse tension (26), et
- un second accumulateur d'énergie (38) dont l'énergie peut être injectée dans une seconde branche de réseau embarqué haute tension (34) reliée à des utilisateurs haute tension (36), ainsi qu'
- au moins un dispositif de commutation (18) commandé, pour répartir l'énergie générée par le générateur multiterision (10) entre le premier (24) et le second (34) réseau embarqué,
- le premier (28) et le second (38) accumulateur d'énergie étant branchés en série, et la première branche de réseau embarqué (24) est, d'un côté, reliée au noeud (22) entre le premier (28) et le second (38) accumulateur d'énergie et de l'autre, à un potentiel de référence (12) du premier accumulateur d'énergie (28) alors que la seconde branche de réseau embarqué (34) est branchée en parallèle au montage en série composé du premier (28) et du second (38) accumulateur d'énergie,
- le dispositif de commutation (18) commandé, pouvant commuter entre une première configuration de commutation dans laquelle le générateur multitension (10) est branché en parallèle au premier accumulateur d'énergie (28) et à la première branche de réseau embarqué (24) et une seconde configuration dans laquelle le générateur multitension (10) est branché en parallèle au montage en série composé du premier (28) et du second (38) accumulateur d'énergie, ainsi que de la seconde branche de réseau embarqué (34),
- le dispositif de commutation (18) commandé ayant un premier interrupteur (42) commandé, entre le noeud de raccordement (22) de la première branche de réseau embarqué et la borne (14) du générateur multitension (10), à l'opposé du potentiel de référence (12),
- le premier accumulateur d'énergie (28) est en forme de batterie,
**caractérisé en ce que**
- le second accumulateur d'énergie (38) est un montage à condensateurs de forte capacité,
- le dispositif de commutation (18) est commandé pour que le premier interrupteur (42) soit ouvert lorsque l'état de charge du second accumulateur d'énergie (38) est descendu au-dessous d'un niveau de charge prédéfini,
- le générateur multitension fournit une tension de sortie choisie de manière quelconque, et
- le générateur multitension est commandé de façon qu'après ouverture du premier interrupteur, il génère une tension en forme de rampe pour charger le circuit à condensateurs.

2. Réseau embarqué multitension selon la revendication 1,
**caractérisé en ce que**
le dispositif de commutation (10) commandé comporte en outre une diode (44) installée entre les bornes du générateur multitension (10) à l'opposé des potentiels de référence respectifs et le second accumulateur d'énergie (38) de façon que lorsque le premier interrupteur (42) est fermé, aucun courant ne passe du second accumulateur d'énergie (38) dans le premier accumulateur d'énergie (28).

3. Réseau embarqué multitension selon la revendication 1,
**caractérisé en ce que**
le dispositif de commutation (19) commandé comporte en outre un second interrupteur commandé (46) branché entre les bornes du générateur multitension (10) à l'opposé des potentiels de référence respectifs et le second accumulateur d'énergie (38) de façon que lorsque le premier interrupteur (42) est fermé, on évite le passage du courant du second accumulateur d'énergie (38) vers le premier accumulateur d'énergie (28) par l'ouverture du second interrupteur (46).

4. Réseau embarqué multitension selon l'une des revendications précédentes,
**caractérisé par**
un ou plusieurs troisièmes accumulateurs d'énergie qui sont mis en cascade de façon analogue avec le premier et le second accumulateur d'énergie (28, 38) et sont reliés au générateur multitensions (10).
